# EUROPEAN PATENT APPLICATION

(11) **EP 4 482 044 A2**
(43) Date of publication of application: **25.12.2024**
(21) Application number: 24159095.9
(22) Date of filing: 22.02.2024
(51) Int. Cl.: H04B 7/04, H01Q 3/44, H01Q 15/14, H01Q 21/06, G06N 3/02

(54) **RECONFIGURABLE INTELLIGENT SURFACE, COMMUNICATION METHOD USING THE RECONFIGURABLE INTELLIGENT SURFACE, AND TRANSCEIVER DEVICE INCLUDING THE RECONFIGURABLE INTELLIGENT SURFACE**

(30) Priority: 20.06.2023 KR 20230078928; 08.11.2023 KR 20230153941
(71) Applicant: POSTECH Research and Business Development Foundation, Pohang-si, Gyeongsangbuk-do 37673 (KR)
(72) Inventor: HONG, Wonbin, Gyeongsangbuk-do (KR); HWANG, Myeonggin, Gyeongsangbuk-do (KR)
(74) Representative: Appleyard Lees IP LLP

(57) **Abstract**

Provided are a reconfigurable intelligent surface, a communication method using the reconfigurable intelligent surface, and a transceiver device including the reconfigurable intelligent surface. The reconfigurable intelligent surface may include a plurality of unit cells arranged in a mesh form, a beam steering module electrically connected to the plurality of unit cells, and at least one sensing module electrically connected to the plurality of unit cells, wherein the plurality of unit cells may include a plurality of reflection unit cells configured to reflect at least one signal incident thereon in a direction set by the beam steering module, and a plurality of sensing unit cells configured to obtain phase information of the at least one signal and transmit the phase information to the at least one sensing module.

## Description

### CROSS-REFERENCE TO RELATED APPLICATION

This application is based on and claims priority under 35 U.S.C. §119 to Korean Patent Application No . 10-2023-0078928, filed on June 20, 2023, and Korean Patent Application No. 10-2023-0153941, filed on November 8, 2023, in the Korean Intellectual Property Office, the disclosures of which are incorporated by reference herein in their entireties.

### BACKGROUND

### 1. Field

The disclosure relates to a reconfigurable intelligent surface, a communication method using the reconfigurable intelligent surface, and a transceiver device including the reconfigurable intelligent surface. In particular, the disclosure relates to a technology for recognizing a surrounding environment by using a reconfigurable intelligent surface and establishing a wireless communication channel in accordance with the surrounding environment.

This research was conducted with the support of Samsung Future Technology Promotion Project (Project No.: SRFC-TE2103-01).

### 2. Description of the Related Art

Recently, mobile communication has required high reliability and high data transmission rates for services such as virtual/augmented reality and movie downloads. However, in a wireless environment, due to obstacles such as walls, the strength of a signal received from a base station may decrease and the reliability and data transmission rate of a cellular network may decrease rapidly.

In order to solve this problem, additional base stations and repeaters are installed as a solution. However, this is inefficient due to high installation costs and restricted installation places. In order to improve the wireless communication performance in a wireless environment, a reconfigurable intelligent surface (RIS) has attracted attention due to its few restrictions on installation places and low costs.

As a meta surface including elements controllable by software, a reconfigurable intelligent surface may adjust the phase of a reflected radio wave and may form a desired form of beam by controlling the phase of a reflected wave.

Moreover, when a reconfigurable intelligent surface transmits a signal from a transmitter to a receiver, it may not be easy to recognize the positions of the transmitter and the receiver. When failing to recognize the positions of the transmitter and the receiver, the reconfigurable intelligent surface may only form a fixed wireless communication channel. Accordingly, it may not be easy to form a wireless communication channel by considering a surrounding environment.

### SUMMARY

Additional aspects will be set forth in part in the description which follows and, in part, will be apparent from the description, or may be learned by practice of the presented embodiments of the disclosure.

According to an aspect of the disclosure, a reconfigurable intelligent surface according to an embodiment may include a plurality of unit cells arranged in a mesh form. The reconfigurable intelligent surface according to an embodiment may include a beam steering module electrically connected to the plurality of unit cells. The reconfigurable intelligent surface according to an embodiment may include at least one sensing module electrically connected to the plurality of unit cells. The plurality of unit cells according to an embodiment may include a plurality of reflection unit cells configured to reflect at least one signal incident thereon in a direction set by the beam steering module. The plurality of unit cells according to an embodiment may include a plurality of sensing unit cells configured to obtain phase information of the at least one signal and transmit the phase information to the at least one sensing module.

According to another aspect of the disclosure, a communication method using a reconfigurable intelligent surface according to an embodiment may include receiving, by the reconfigurable intelligent surface, at least one beam incident thereon at different phases. The communication method using the reconfigurable intelligent surface according to an embodiment may include obtaining, by the reconfigurable intelligent surface, phase information by sensing the at least one beam by using a plurality of sensing unit cells. The communication method using the reconfigurable intelligent surface according to an embodiment may include converting, by the reconfigurable intelligent surface, the phase information into an image and training a position estimation model by using the image. The communication method using the reconfigurable intelligent surface according to an embodiment may include estimating, by the reconfigurable intelligent surface, position information of a transceiver by using the trained position estimation model. The communication method using the reconfigurable intelligent surface according to an embodiment may include reflecting, by the reconfigurable intelligent surface, the at least one beam incident thereon to the transceiver by inputting the estimated position information of the transceiver to a processor. The communication method using the reconfigurable intelligent surface according to an embodiment may include applying, by the reconfigurable intelligent surface, a bias voltage in accordance with a propagation environment of the at least one beam.

According to another aspect of the disclosure, a transceiver device according to an embodiment may include a beam generator configured to generate a beam for transmitting/receiving a radio frequency (RF) band signal. The transceiver device according to an embodiment may include an RF processor configured to upconvert a baseband signal into the RF band signal and transmit the RF band signal through the beam generator or to downconvert the RF band signal received through the beam generator into the baseband signal. The transceiver device according to an embodiment may include a baseband processor configured to perform a conversion function between the baseband signal and digital data. The beam generator according to an embodiment may include an antenna configured to transmit/receive the RF band signal. The beam generator according to an embodiment may include a reconfigurable intelligent surface configured to adjust a direction of the beam. The reconfigurable intelligent surface according to an embodiment may be configured to receive at least one beam incident thereon at different phases. The reconfigurable intelligent surface according to an embodiment may be configured to obtain phase information from the at least one beam. The reconfigurable intelligent surface according to an embodiment may be configured to train a position estimation model by using an image obtained by converting the phase information. The reconfigurable intelligent surface according to an embodiment may be configured to estimate position information of a transceiver by using the trained position estimation model. The reconfigurable intelligent surface according to an embodiment may be configured to reflect the at least one beam incident thereon to the transceiver by inputting the estimated position information of the transceiver to a processor. The reconfigurable intelligent surface according to an embodiment may be configured to apply a bias voltage in accordance with a propagation environment of the at least one beam.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a diagram illustrating a communication system including a reconfigurable intelligent surface (RIS) according to an embodiment;
FIG. 2 is a diagram illustrating the influence of a surrounding environment on a communication system according to an embodiment;
FIG. 3 is a diagram illustrating a reconfigurable intelligent surface according to an embodiment;
FIG. 4A is an exploded perspective view of a unit cell of a reconfigurable intelligent surface according to an embodiment;
FIG. 4B is a plan view of a unit cell of a reconfigurable intelligent surface according to an embodiment;
FIG. 4C is a side view of a unit cell of a reconfigurable intelligent surface according to an embodiment;
FIG. 5 is a perspective view of a reflection unit cell of a reconfigurable intelligent surface according to an embodiment;
FIG. 6 is a perspective view of a sensing unit cell of a reconfigurable intelligent surface according to an embodiment;
FIG. 7A is a graph illustrating reflection coefficients depending on a frequency of a unit cell of a reconfigurable intelligent surface according to an embodiment;
FIG. 7B is a graph illustrating reflection coefficients depending on a frequency of a unit cell of a reconfigurable intelligent surface according to an embodiment;
FIG. 8 is a perspective view illustrating ports of each of two unit cells of a reconfigurable intelligent surface according to an embodiment;
FIG. 9 is a graph illustrating the characteristics of a unit cell of a reconfigurable intelligent surface according to an embodiment;
FIG. 10 is a diagram illustrating a beam steering module of a reconfigurable intelligent surface according to an embodiment;
FIG. 11 is a diagram illustrating a pulse width modulation (PWM) circuit of a beam steering module according to an embodiment;
FIG. 12 is a graph illustrating a voltage input to a PWM circuit of a beam steering module according to an embodiment;
FIG. 13 is a diagram illustrating at least one sensing module of a reconfigurable intelligent surface according to an embodiment;
FIG. 14 is a flowchart illustrating a communication method using a reconfigurable intelligent surface according to an embodiment;
FIG. 15 is a diagram illustrating a method of obtaining phase information by using a reconfigurable intelligent surface according to an embodiment;
FIG. 16 is a diagram illustrating a method of obtaining an image by using a reconfigurable intelligent surface according to an embodiment;
FIG. 17 is a diagram illustrating a method of training a position estimation model by using a reconfigurable intelligent surface according to an embodiment;
FIG. 18 is a diagram illustrating a method of inputting position information to a processor by using a reconfigurable intelligent surface according to an embodiment;
FIG. 19 is a graph illustrating a radiation pattern obtained by applying a bias voltage in accordance with a propagation environment of a beam by using a reconfigurable intelligent surface according to an embodiment;
FIG. 20 is a diagram illustrating a communication system to which a reconfigurable intelligent surface is applied according to an embodiment;
FIG. 21 is a block diagram of a base station according to an embodiment; and
FIG. 22 is a block diagram of a transceiver device according to an embodiment.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

The following description of embodiments should not be construed as limiting the scope of the disclosure, and those that may be easily inferred by those of ordinary skill in the art should be construed as being included in the scope of the embodiments. Hereinafter, embodiments will be described in detail merely as examples with reference to the accompanying drawings.

Hereinafter, embodiments will be described in detail with reference to the accompanying drawings. Like reference numerals in the drawings will denote like elements, and sizes of elements in the drawings may be exaggerated for clarity and convenience of description. The embodiments described below are merely examples, and various modifications may be made therein.

As used herein, the terms "over" or "on" may include not only "directly over" or "directly on" but also "indirectly over" or "indirectly on". As used herein, the singular forms "a", "an", and "the" may include the plural forms as well, unless the context clearly indicates otherwise. Also, when something is referred to as "including" a component, another component may be further included unless specified otherwise.

The use of the terms "a", "an", and "the" and other similar indicative terms may be construed to cover both the singular and the plural. Unless there is an explicit order or a contrary description, operations constituting a method may be performed in a suitable order and are not necessarily limited to the described order.

Also, as used herein, the terms "units" and "modules" may refer to units that perform at least one function or operation, and the units may be implemented as hardware or software or a combination of hardware and software.

Connections or connection members of lines between the elements illustrated in the drawings may illustratively represent functional connections and/or physical or logical connections and may be represented as various replaceable or additional functional connections, physical connections, or logical connections in an actual apparatus.

Expressions such as "at least one of," when preceding a list of elements, modify the entire list of elements and do not modify the individual elements of the list. For example, an expression such as "at least one of A, B, and C" or "at least one selected from the group consisting of A, B, and C" may be interpreted as only A, only B, only C, or any combination of two or more of A, B, and C, such as A, B, and C, A and B, B and C, and A and C.

When the term "about" or "substantially" is used in relation to a numerical value, the numerical value may be interpreted as including manufacturing or operating deviations (e.g., ±10 %) around the numerical value. Also, when the term "generally" or "substantially" is used in relation to a geometric shape, it may be intended that a geometric accuracy is not required and a tolerance of the shape is within the scope of the present embodiments. Also, regardless of whether a numerical value or a shape is modified by the term "about" or "substantially," the numerical value or the shape may be interpreted as including manufacturing or operating deviations (e.g., ±10 %) around the numerical value or the shape.

Although terms such as "first" and "second" may be used herein to describe various elements or components, these elements or components should not be limited by these terms. These terms are only used to distinguish one element or component from another element or component.

All examples or illustrative terms used herein are merely intended to describe the technical concept of the disclosure in detail, and the scope of the disclosure is not limited by these examples or illustrative terms unless otherwise defined in the appended claims.

Hereinafter, embodiments will be described in detail merely as examples with reference to the accompanying drawings.

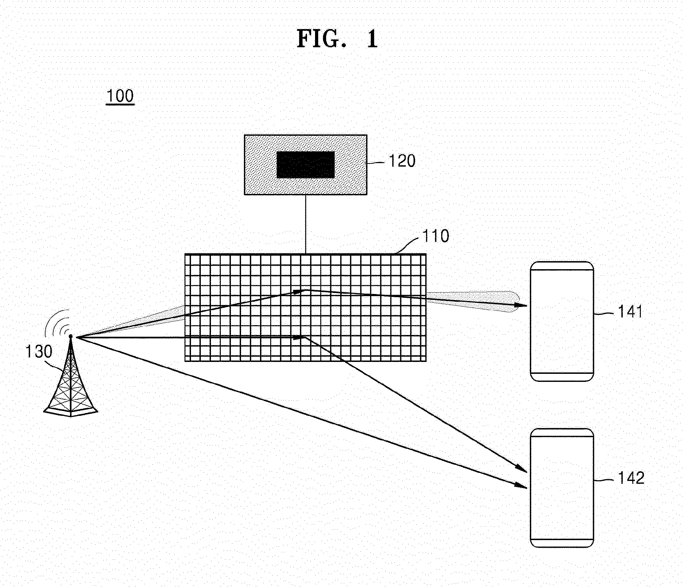

FIG. 1 is a diagram illustrating a communication system 100 including a reconfigurable intelligent surface (RIS) 110 according to an embodiment. The communication system 100 according to an embodiment may include the RIS 110, a processor 120, a transmitter 130, and at least one receiver 141 and/or 142.

The RIS 110 may receive a signal from the transmitter 130. Under the control by the processor 120, the RIS110 may reconfigure a propagation surface of the RIS 110 based on the occurrence of an event of receiving a signal.

The RIS 110 may steer an incident wave in a particular direction. The wave steered by the RIS 110 according to an embodiment may be an electromagnetic wave in a radio frequency band. For example, the RIS 110 may steer a radio signal in a millimeter wave (hereinafter referred to as'mmWave') band. For example, the millimeter waves may include 5G signals.

By using the propagation surface, the RIS 110 may reflect and transmit the received signal to the at least one receiver 141 and/or 142. For example, the RIS 110 may reflect the received signal to a first receiver 141 to establish a wireless communication channel with the first receiver 141. For example, the RIS 110 may reflect the received signal to a second receiver 142 to establish a wireless communication channel, like the signal directly transmitted to the transmitter 130 and the second receiver 142.

The RIS 110 may obtain position information of the transmitter 130 and the at least one receiver 141 and/or 142 in order to transmit a signal to the at least one receiver 141 and/or 142. When failing to obtain the position information of the transmitter 130 and the at least one receiver 141 and/or 142, the RIS 110 may establish a wireless communication channel with certain characteristics. For example, when failing to recognize the position information of the transmitter 130 and the at least one receiver 141 and/or 142, the RIS 110 may establish a wireless communication channel with a fixed form.

The RIS 110 may sense or recognize the position information of the transmitter 130 and the at least one receiver 141 and/or 142. Under the control by the processor 120, the RIS 110 may reconfigure the propagation surface of the RIS 110 based on the position information of the transmitter 130 and the at least one receiver 141 and/or 142. Based on the reconfigured propagation surface, the RIS 110 may steer a beam incident from the transmitter 130 toward the at least one receiver 141 and/or 142. When the RIS 110 has a function of recognizing the position information of the transmitter 130 and the at least one receiver 141 and/or 142, the beam incident from the transmitter 130 may be adaptively steered in accordance with the position of the at least one receiver 141 and/or 142.

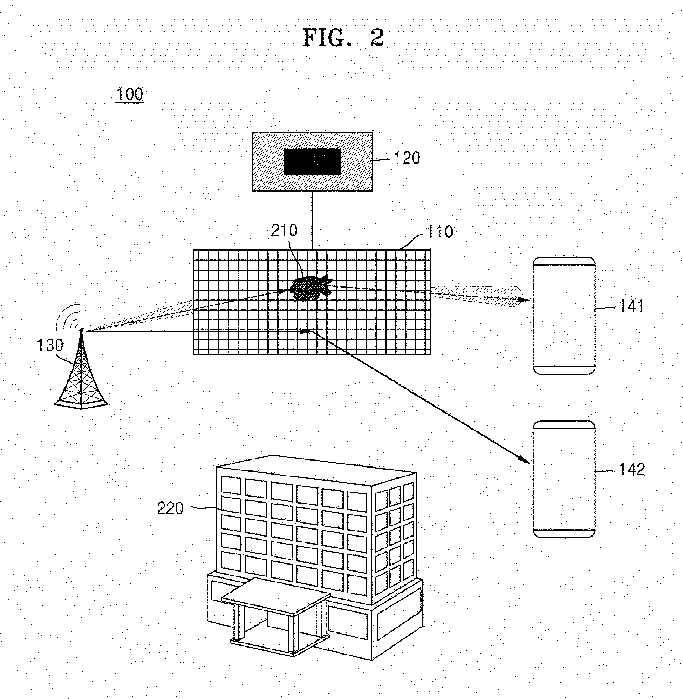

FIG. 2 is a diagram illustrating the influence of a surrounding environment on a communication system 100 according to an embodiment. The communication system 100 may be influenced in a communication environment by a first object 210 of the RIS 110 or a second object 220 in the communication system 100.

The first object 210 may be an obstacle located on the propagation surface of the RIS 110. For example, the first object 210 may be a foreign substance such as dust, moisture, or snow located on the propagation surface of the RIS 110. When the first object 210 is located on the RIS 110, a wireless communication channel formed by the RIS 110 may be influenced. For example, when the first object 210 is located on the RIS 110, the strength of a signal reflected by the RIS 110 may decrease and thus the overall quality of the wireless communication channel may decrease.

The second object 220 may be an obstacle located between the transmitter 130 and the at least one receiver 141 and/or 142. For example, the second object 220 may be a building located between the transmitter 130 and the second receiver 142. When the second object 220 is located between the transmitter 130 and the at least one receiver 141, 142, a wireless communication channel between the transmitter 130 and the at least one receiver 141, 142 may be influenced. For example, when the second object 220 is located between the transmitter 130 and the second receiver 142, a signal directly transmitted to the transmitter 130 and the second receiver 142 may be blocked and thus the overall quality of the wireless communication channel may decrease.

The first object 210 of the RIS 110 or the second object 220 in the communication system 100 may change the characteristics of the wireless communication channel. When the characteristics of the wireless communication channel change, the accuracy of the result of previously estimating the wireless communication channel may decrease. When applying a wireless communication channel estimation method considering the case where the first object 210 or the second object 220 exists, the accuracy of the result of the estimation of the wireless communication channel in an actual wireless communication environment may be improved.

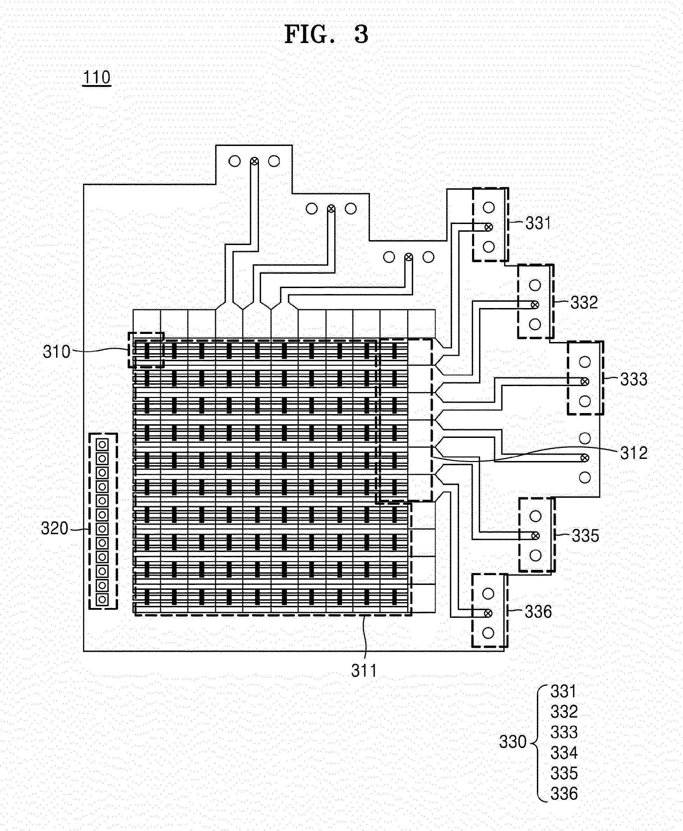

FIG. 3 is a diagram illustrating an RIS 110 according to an embodiment. The RIS 110 according to an embodiment may include a plurality of unit cells 310, a beam steering module 320, and at least one sensing module 330.

The plurality of unit cells 310 may be two-dimensionally arranged. The plurality of unit cells 310 may be arranged in a mesh form. Each of the plurality of unit cells 310 may be square or rectangular. Accordingly, each of the plurality of unit cells 310 may be arranged in a matrix type. For example, the plurality of unit cells 310 may be arranged in parallel in a first direction (e.g., X-axis direction or row direction) and a second direction (e.g., Y-axis direction or column direction). The second direction may be perpendicular to the first direction. However, the disclosure is not limited thereto, and the second direction may be a direction intersecting the first direction while not being perpendicular to the first direction.

The plurality of unit cells 310 according to an embodiment may reflect a signal incident on the RIS 110. The plurality of unit cells 310 may cause the RIS 110 to form a beam. The plurality of unit cells 310 may sense at least a portion of the signal incident on the RIS 110.

The beam steering module 320 may be electrically connected to the plurality of unit cells 310. The beam steering module 320 may set a direction to reflect at least one incident signal. The beam steering module 320 may adjust the direction of the beam formed by the RIS 110. For example, the beam steering module 320 may adjust the direction of the beam formed by the RIS 110 to the direction in which the at least one receiver 141 and/or 142 is located.

The at least one sensing module 330 may be electrically connected to the plurality of unit cells 310. The at least one sensing module 330 may be arranged to be spaced apart from the beam steering module 320. The at least one sensing module 330 may include a first sensing module 331, a second sensing module 332, a third sensing module 333, a fourth sensing module 334, a fifth sensing module 335, and a sixth sensing module 336. The at least one sensing module 330 may sense the position of the at least one receiver 141 and/or 142.

The plurality of unit cells 310 may include reflection unit cells 311 and sensing unit cells 312. The reflection unit cells 311 may reflect at least one incident signal in the direction set by the beam steering module 320. The sensing unit cells 312 may obtain phase information of at least one incident signal. The sensing unit cells 312 may transmit the phase information to the at least one sensing module 330. Simultaneously or separately, the sensing unit cells 312 may reflect at least one incident signal in a set direction. The sensing unit cell 312 may perform some or all of the functions performed by the reflection unit cell 311.

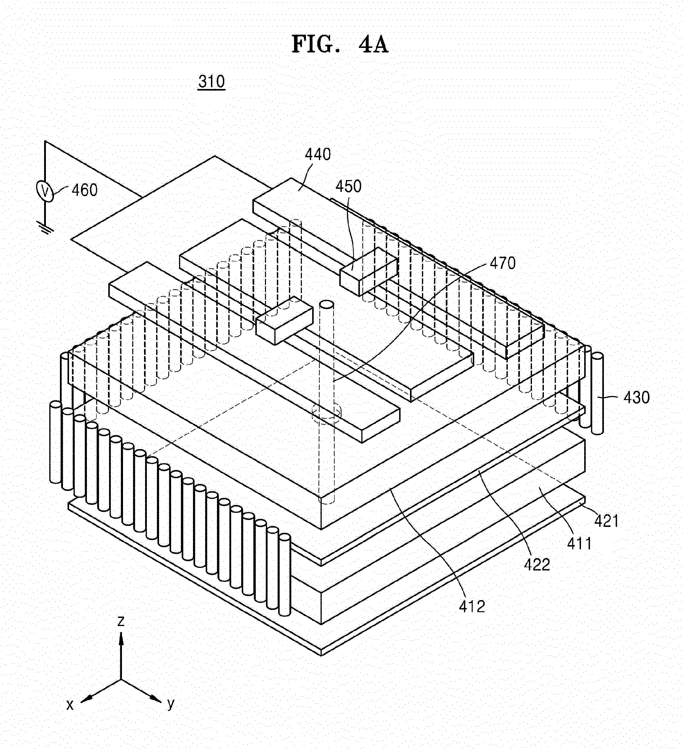

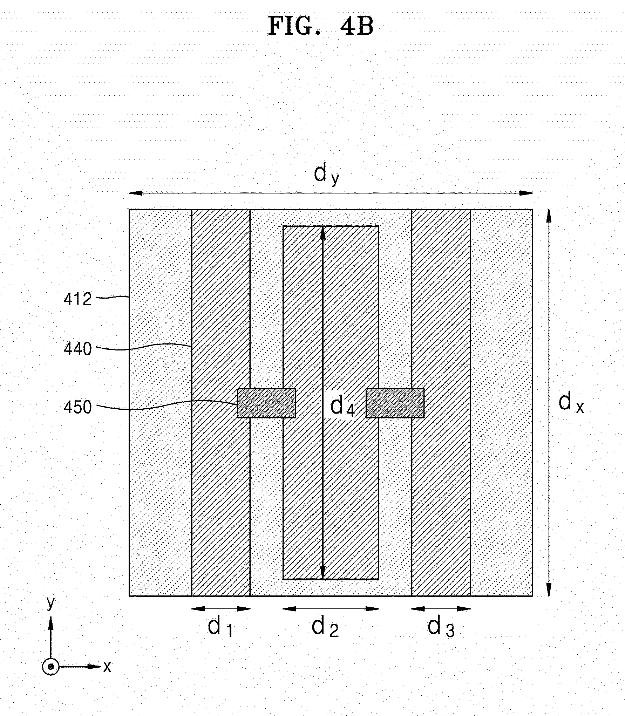

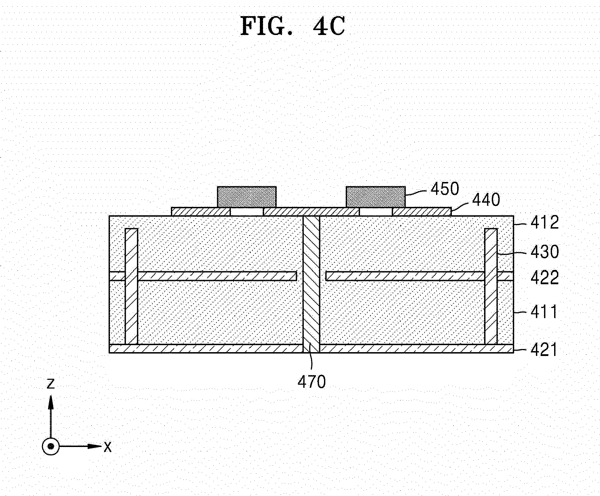

FIG. 4A is an exploded perspective view of a unit cell 310 of an RIS 110 according to an embodiment. FIG. 4B is a plan view of a unit cell 310 of an RIS 110 according to an embodiment. FIG. 4C is a side view of a unit cell 310 of an RIS 110 according to an embodiment. The unit cell 310 according to an embodiment may include a first substrate 411, a second substrate 412, at least one via wall 430, at least one patch 440, and at least one varactor diode 450.

The first substrate 411 may have a rectangular parallelepiped shape. The first substrate 411 may have electrical conductivity. The first substrate 411 may include a circuit and a ceramic substrate. For example, the first substrate 411 may include a low temperature co-fired ceramic substrate. However, the disclosure is not limited thereto, and the first substrate 411 may include a printed circuit board (PCB) and a liquid crystal layer. A first ground plane 421 may be arranged on the lower surface of the first substrate 411.

The second substrate 412 may face the first substrate 411. The second substrate 412 may have a rectangular parallelepiped shape. The second substrate 412 may have electrical conductivity. The second substrate 412 may include a circuit and a ceramic substrate. For example, the second substrate 412 may include a low temperature co-fired ceramic substrate. However, the disclosure is not limited thereto, and the second substrate 412 may include a printed circuit board and a liquid crystal layer. A second ground plane 422 may be arranged on the lower surface of the second substrate 412. Accordingly, the second substrate 412 may be at least partially electrically separated from the first substrate 411.

The at least one via wall 430 may be arranged in an edge area of the first substrate 411 and an edge area of the second substrate 412. The at least one via wall 430 may pass through the first substrate 411 and the second substrate 412. For example, the at least one via wall 430 may pass through at least a portion of the first substrate 411 and the second substrate 412 in the thickness direction (e.g., Z-axis direction).

The at least one patch 440 may be arranged over the second substrate 412. The at least one patch 440 may receive a voltage from a power supply 460. The at least one patch 440 may have electrical conductivity. The at least one patch 440 may include metal. For example, the at least one patch 440 may include at least one of copper, silver, and gold. The at least one patch 440 may form a beam by reflecting an incident signal. The at least one patch 440 may be connected to a sensing line 470. The at least one patch 440 may transmit an incident signal to the at least one sensing module 330 through the sensing line 470.

The at least one varactor diode 450 may be arranged over the at least one patch 440. The at least one varactor diode 450 may electrically connect the at least one patch 440 to each other. For example, when the unit cell 310 includes three patches, the unit cell 310 may include two varactor diodes. The two varactor diodes may be arranged between the three patches to electrically connect the patches to each other. The capacitance value of the at least one varactor diode 450 may change according to a change in the voltage transmitted from the power supply 460. When the voltage transmitted from the power supply 460 changes, the capacitance value between the at least one patch 440 may change. Accordingly, the electrical characteristics of the unit cell 310 may be controlled by changing the voltage transmitted from the power supply 460. For example, the impedance or resonance frequency of the unit cell 310 may be controlled by changing the voltage transmitted from the power supply 460.

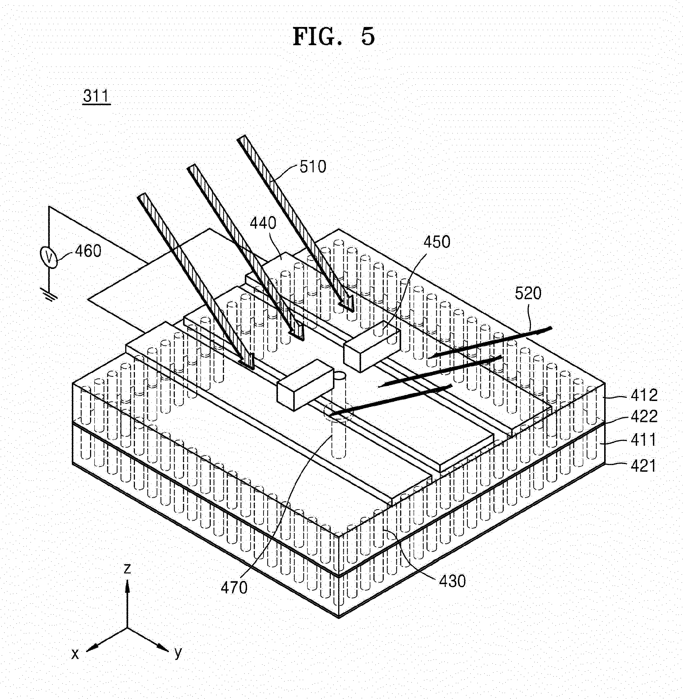

FIG. 5 is a perspective view of a reflection unit cell 311 of an RIS 110 according to an embodiment.

The at least one patch 440 may determine the type of the unit cell 310. For example, the at least one patch 440 may determine whether the unit cell 310 is a reflection unit cell 311. Depending on the length of the at least one patch 440, it may be determined whether the unit cell 310 is a reflection unit cell 311. When the length of the at least one patch 440 is greater than a threshold value, the unit cell 310 may be a reflection unit cell 311. When the unit cell 310 is a reflection unit cell 311, the at least one patch 440 may reflect a first signal 510 that is an incident signal. The at least one patch 440 may reflect the first signal 510 to output a second signal 520. The at least one patch 440 may reflect the second signal 520 in a set direction.

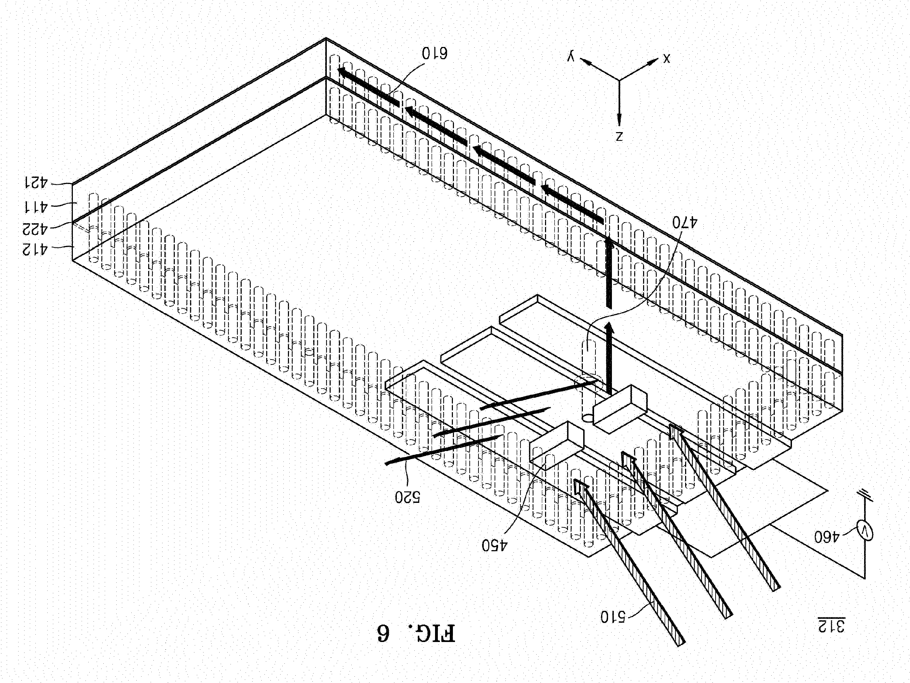

FIG. 6 is a perspective view of a sensing unit cell 312 of an RIS 110 according to an embodiment.

The at least one patch 440 may determine the type of the unit cell 310. For example, the at least one patch 440 may determine whether the unit cell 310 is a sensing unit cell 312. Depending on the length of the at least one patch 440, it may be determined whether the unit cell 310 is a sensing unit cell 312. When the length of the at least one patch 440 is less than or equal to a threshold value, the unit cell 310 may be a sensing unit cell 312. When the unit cell 310 is a sensing unit cell 312, the at least one patch 440 may transmit at least a portion of a first signal 510, which is an incident signal, to the at least one sensing module 330 through the sensing line 470. The at least one patch 440 may transmit a sensing signal 610 to the sensing module 330 through the sensing line 470. The at least one patch 440 may reflect the other portion of the first signal 510, which is incident, as a second signal 520.

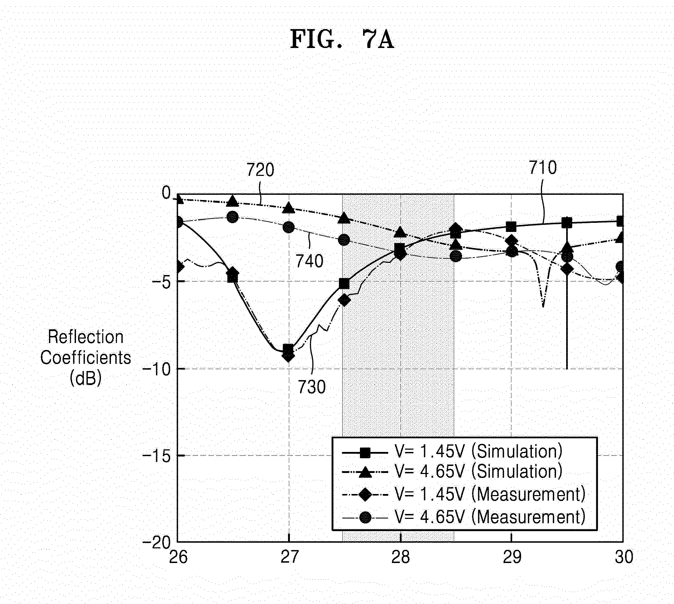

FIG. 7A is a graph illustrating reflection coefficients depending on the frequency of a unit cell 310 of an RIS 110 according to an embodiment. FIG. 7A is a graph illustrating how the size of the reflection coefficient changes according to a change in the frequency of a voltage applied to the unit cell 310.

The electrical characteristics of the first substrate 411 and the second substrate 412 of the unit cell 310 according to an embodiment may change according to a change in the frequency of a voltage applied to the first substrate 411 and the second substrate 412. For example, when the first substrate 411 and the second substrate 412 include a liquid crystal layer, the dielectric constant of the liquid crystal layer included in the first substrate 411 and the second substrate 412 may change according to a change in the frequency of a voltage applied to the first substrate 411 and the second substrate 412. When the dielectric constant of the liquid crystal layer included in the first substrate 411 and the second substrate 412 changes, the impedance of the unit cell 310 may change. As the impedance of the unit cell 310 changes, the size of the reflection coefficient of the unit cell 310 may change.

A first graph 710 may represent the simulation of a change in the size of the reflection coefficient of the unit cell 310 according to a change in the frequency of the voltage when the size of the voltage is 1.45 V. A second graph 720 may represent the simulation of a change in the size of the reflection coefficient of the unit cell 310 according to a change in the frequency of the voltage when the size of the voltage is 4.65 V in simulation. A third graph 730 may represent the result of the measurement of a change in the size of the reflection coefficient of the unit cell 310 according to a change in the frequency of the voltage when the size of the voltage is 1.45 V. A fourth graph 740 may represent the result of the measurement of a change in the size of the reflection coefficient of the unit cell 310 according to a change in the frequency of the voltage when the size of the voltage is 4.65 V.

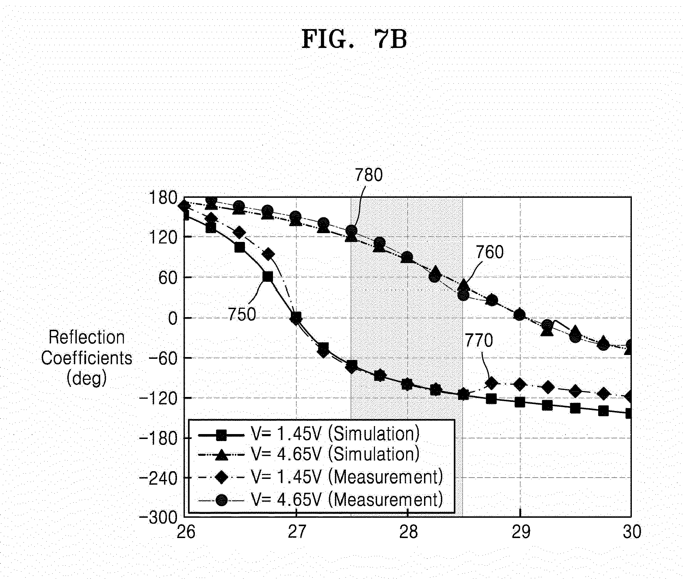

FIG. 7B is a graph illustrating reflection coefficients depending on the frequency of a unit cell 310 of an RIS 110 according to an embodiment. FIG. 7B is a graph illustrating how the phase angle of the reflection coefficient changes according to a change in the frequency of a voltage applied to the unit cell 310.

The electrical characteristics of the first substrate 411 and the second substrate 412 of the unit cell 310 according to an embodiment may change according to a change in the frequency of a voltage applied to the first substrate 411 and the second substrate 412. For example, when the first substrate 411 and the second substrate 412 include a liquid crystal layer, the dielectric constant of the liquid crystal layer included in the first substrate 411 and the second substrate 412 may change according to a change in the frequency of a voltage applied to the first substrate 411 and the second substrate 412. When the dielectric constant of the liquid crystal layer included in the first substrate 411 and the second substrate 412 changes, the impedance of the unit cell 310 may change. As the impedance of the unit cell 310 changes, the phase angle of the reflection coefficient of the unit cell 310 may change.

A first graph 750 may represent the simulation of a change in the phase angle of the reflection coefficient of the unit cell 310 according to a change in the frequency of the voltage when the size of the voltage is 1.45 V. A second graph 760 may represent the simulation of a change in the phase angle of the reflection coefficient of the unit cell 310 according to a change in the frequency of the voltage when the size of the voltage is 4.65 V. A third graph 770 may represent the result of the measurement of a change in the phase angle of the reflection coefficient of the unit cell 310 according to a change in the frequency of the voltage when the size of the voltage is 1.45 V. A fourth graph 780 may represent the result of the measurement of a change in the phase angle of the reflection coefficient of the unit cell 310 according to a change in the frequency of the voltage when the size of the voltage is 4.65 V.

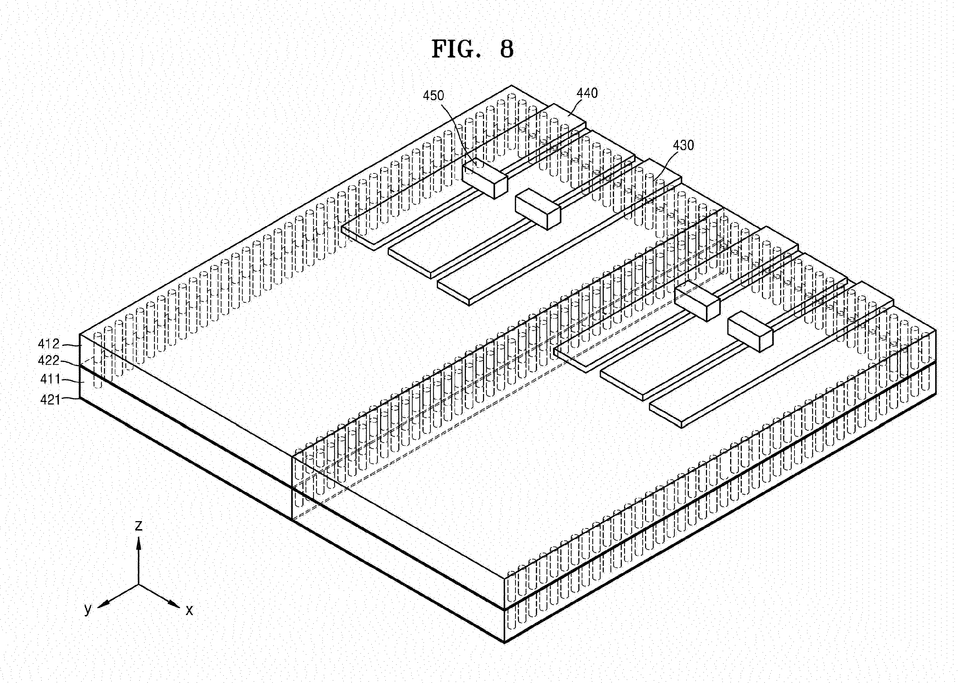

FIG. 8 is a perspective view illustrating ports of each of two unit cells 310 of an RIS according to an embodiment.

In an embodiment, the unit cell 310 may estimate the position of the transmitter 130 by using the phase of an incident signal. In order to improve the accuracy of the position of the transmitter 130 estimated by the unit cell 310, a phase distortion of a signal incident on the unit cell 310 may be reduced. In order to reduce the phase distortion of the signal incident on the unit cell 310, each of the unit cells 310 may include at least one via wall 430.

In an embodiment, the at least one via wall 430 may pass through at least a portion of the first substrate 411 and the second substrate 412 of each of the unit cells 310. The at least one via wall 430 may be arranged to surround at least a portion of the side surface of each of the unit cells 310. Accordingly, the at least one via wall 430 may electrically separate adjacent unit cells 310 from each other. That is, the at least one via wall 430 may isolate adjacent unit cells 310 from each other. When the at least one via wall 430 surrounds at least a portion of the side surface of each of the unit cells 310, a phase distortion of a signal incident on the unit cell 310 may be reduced. Accordingly, the unit cell 310 may more accurately sense the phase of the incident signal.

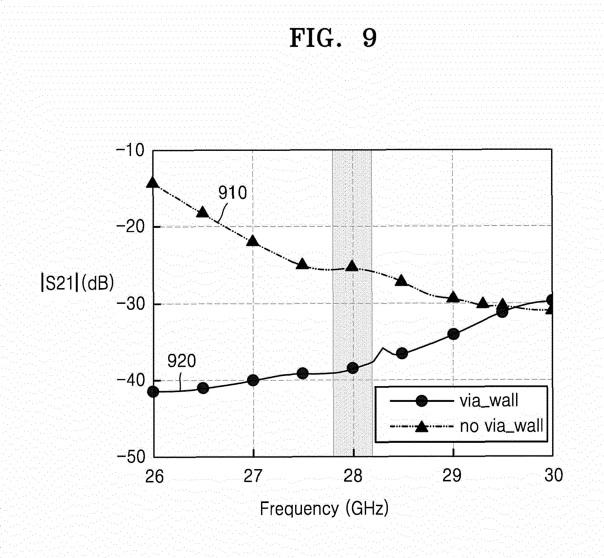

FIG. 9 is a graph illustrating the characteristics of a unit cell 310 of an RIS 110 according to an embodiment.

A first graph 910 illustrates the characteristics between a first port and a second port according to the frequency of a unit cell that does not include a via wall. The characteristics between the first port and the second port may be the size of an S parameter between the first port and the second port. The size of the S parameter between the first port and the second port may be a ratio between the size of an input voltage input through the first port and the size of an output voltage output through the second port. Referring to the first graph 910, in a frequency band around about 28 GHz widely used in 5G mmWave, the size of the S parameter between the first port and the second port may be about -25 dB.

A second graph 920 illustrates the characteristics between the first port and the second port according to the frequency of a unit cell 310 that includes at least one via wall 430. Referring to the second graph 920, in a frequency band around about 28 GHz widely used in 5G mmWave, the size of the S parameter between the first port and the second port may be about -40 dB.

As the size of the S parameter between the first port and the second port decreases, the electrical influence between the first port and the second port may decrease. When the electrical influence between the first port and the second port decreases, the phase distortion of the signal incident on the unit cell 310 may decrease. Referring to the first graph 910 and the second graph 920, when the unit cell 310 includes at least one via wall 430, the phase distortion of the signal incident on the unit cell 310 may be reduced. As a result, when the unit cell 310 includes at least one via wall 430, the unit cell 310 may more accurately sense the phase of the incident signal.

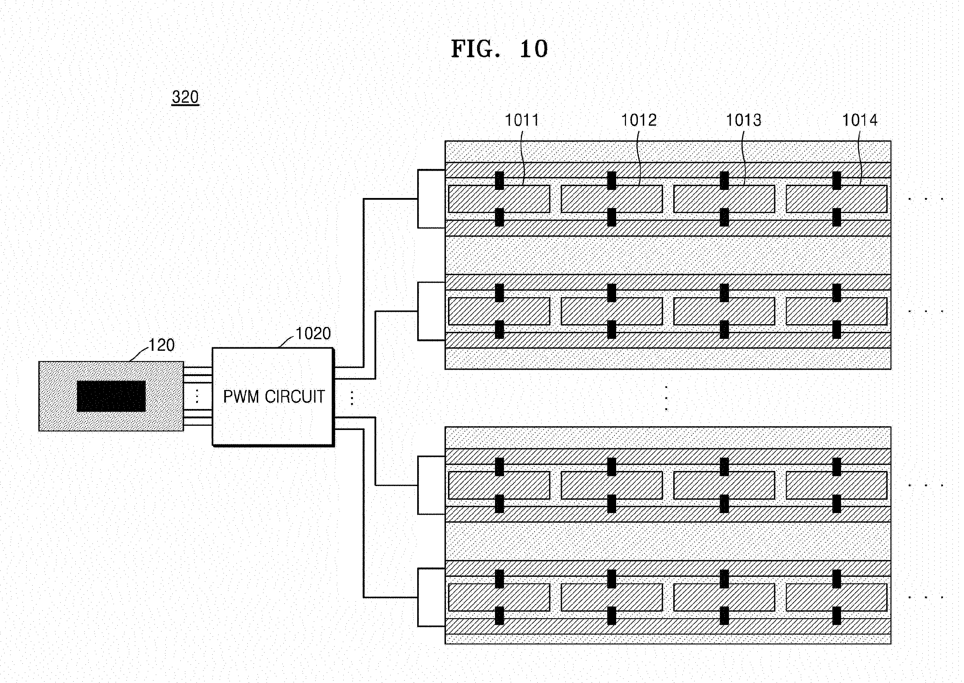

FIG. 10 is a diagram illustrating a beam steering module 320 of an RIS 110 according to an embodiment. The beam steering module 320 may include a processor 120, a plurality of ground circuits 1011, 1012, 1013, and 1014, and a pulse width modulation (PWM) circuit 1020.

The processor 120 may overall control the beam steering module 320. The processor 120 may control the PWM circuit 1020. The processor 120 may control at least one of the amplitude of a voltage waveform input to the PWM circuit 1020, the period of a waveform input to the PWM circuit 1020, and the duty ratio of a voltage waveform input to the PWM circuit 1020. For example, the processor 120 may be an Arduino PWM controller.

The plurality of ground circuits 1011, 1012, 1013, and 1014 may be arranged in a center portion of a plurality of unit cells 310 included in the beam steering module 320. The plurality of ground circuits 1011, 1012, 1013, and 1014 may set a reference voltage of a plurality of unit cells 310 included in the beam steering module 320.

The PWM circuit 1020 may be connected to the processor 120. The PWM circuit 1020 may control the width of a voltage waveform input to the beam steering module 320. The PWM circuit 1020 may control the voltage waveform input to the beam steering module 320 such that the beam steering module 320 adjusts the direction of the incident signal. The PWM circuit 1020 may be a smooth PWM circuit.

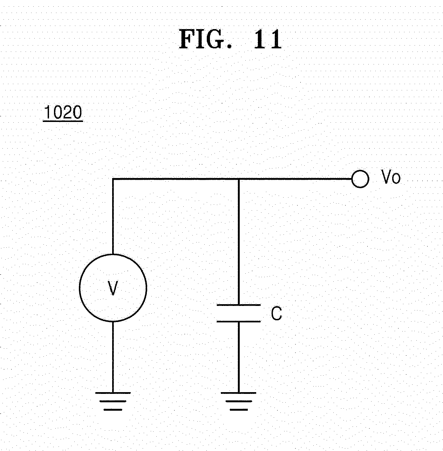

FIG. 11 is a diagram illustrating a PWM circuit 1020 of a beam steering module 320 according to an embodiment. The PWM circuit 1020 may include a voltage source V and a capacitor C.

The PWM circuit 1020 may apply a desired voltage to at least one varactor diode 450 of the unit cell 310 included in the beam steering module 320 by using the voltage source V and the capacitor C.

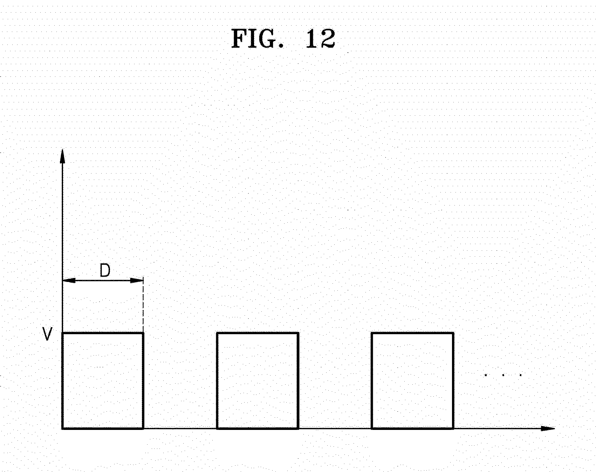

FIG. 12 is a graph illustrating a voltage input to a PWM circuit 1020 of a beam steering module 320 according to an embodiment.

A voltage of a pulse waveform having a constant amplitude (V) and a duration (D) may be input to the PWM circuit 1020. The voltage input to the PWM circuit 1020 may represent a value of 0 to 255 by an analog write method.

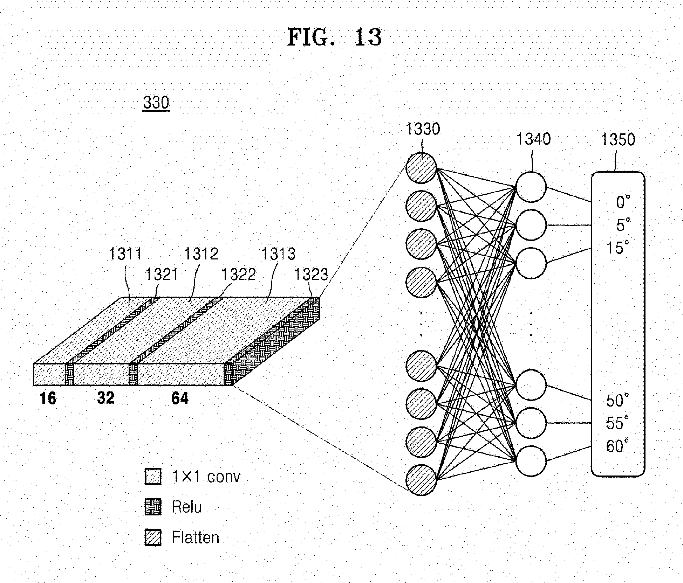

FIG. 13 is a diagram illustrating at least one sensing module 330 of an RIS 110 according to an embodiment. The at least one sensing module 330 may include a plurality of convolution (Conv) portions 1311, 1312, and 1313 and a plurality of ReLU portions 1321, 1322, and 1323. The data result value derived through each of the plurality of ReLU portions 1321, 1322, and 1323 may be a flattening portion 1330. The flattening portion 1330 may be used to generate a simplification portion 1340 through a data processing process. The simplification portion 1340 may be used to generate an angle data portion 1350 through an additional data processing process.

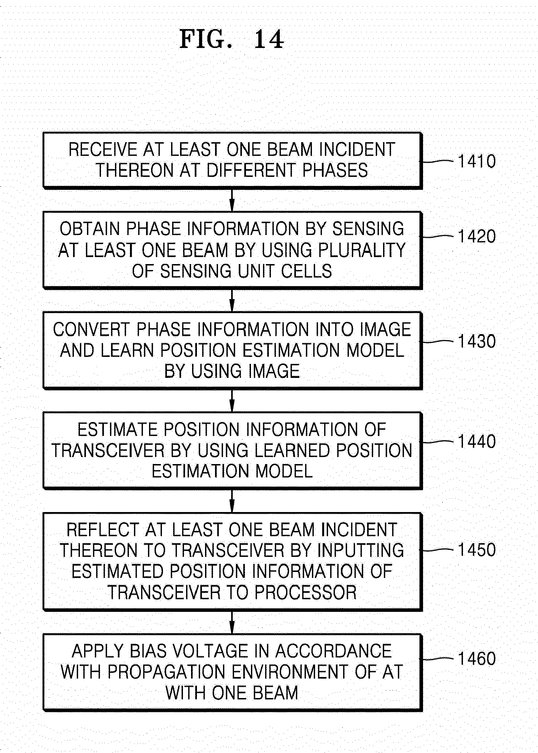

FIG. 14 is a flowchart illustrating a communication method using an RIS 110 according to an embodiment.

In operation 1410, the RIS 110 according to an embodiment may receive at least one beam incident thereon at different phases. At least one beam may be incident on the RIS 110. The at least one beam incident on the RIS 110 may have different phases. The RIS 110 may receive incident signals from the transmitter 130.

In operation 1420, the RIS 110 according to an embodiment may obtain phase information by sensing at least one beam by using a plurality of sensing unit cells 312. The at least one beam incident on the RIS 110 may be sensed by the plurality of sensing unit cells 312. The plurality of sensing unit cells 312 may obtain phase information of at least one incident signal. The at least one patch 440 included in the plurality of sensing unit cells 312 may transmit at least a portion of the incident signal to the at least one sensing module 330 through the sensing line 470. The at least one patch 440 included in the plurality of sensing unit cells 312 may reflect, in a set direction, the other signals other than the components transmitted to the sensing module 330 among the incident signals.

In operation 1430, the RIS 110 according to an embodiment may convert the phase information into an image and train a position estimation model by using the image. The RIS 110 may obtain a distribution of phase difference values by using the phase information. The RIS 110 may convert the distribution of phase difference values into an image. The RIS 110 may input the image to the position estimation model. The position estimation model may learn the input image.

In operation 1440, the RIS 110 according to an embodiment may estimate position information of a transceiver by using the trained position estimation model. For example, the RIS 110 may estimate the position of the at least one receiver 141 and/or 142 to which at least one beam is to be transmitted. However, the disclosure is not limited thereto, and the RIS 110 may also estimate the position of the transmitter 130 that has transmitted at least one beam.

In operation 1450, the RIS 110 according to an embodiment may reflect at least one incident beam to the transceiver by inputting the estimated position information of the transceiver to the processor 120. The RIS 110 may input the estimated position of the at least one receiver 141 and/or 142 to the processor 120. For example, the RIS 110 may input the estimated position of the at least one receiver 141 and/or 142 to an Arduino beamforming codebook. The processor 120 may control the RIS 110 such that the RIS 110 reflects at least one beam to correspond to the position of the at least one receiver 141 and/or 142. Accordingly, the RIS 110 may accurately reflect at least one incident beam to the estimated position of the at least one receiver 141 and/or 142.

In operation 1460, the RIS 110 according to an embodiment may apply a bias voltage in accordance with a propagation environment of the at least one beam. The RIS 110 may apply a bias voltage to the varactor diode 450 of each of the plurality of unit cells 310. When a suitable bias voltage is applied to the varactor diode 450 of each of the plurality of unit cells 310, a reflection pattern of electromagnetic waves may be formed around the intelligent surface 110 in accordance with the propagation environment of the at least one beam.

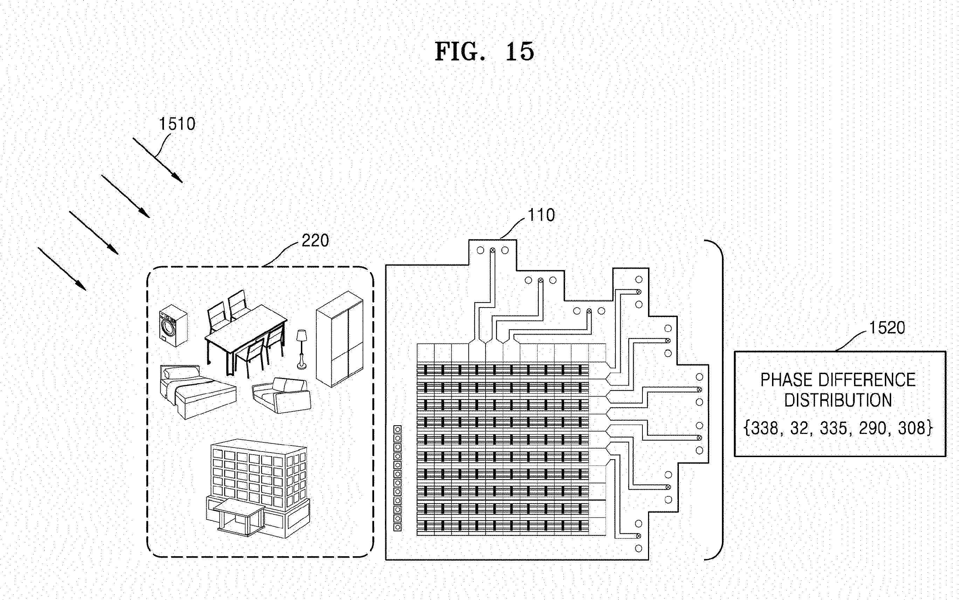

FIG. 15 is a diagram illustrating a method of obtaining phase information by using an RIS 110 according to an embodiment.

At least one beam 1510 may be incident on the RIS 110. The at least one beam 1510 may be incident on the RIS 110 after passing through the second object 220 that is an obstacle around the RIS 110.

The RIS 110 according to an embodiment may obtain a plurality of phase values from the plurality of sensing unit cells 312 respectively. The RIS 110 may extract the phase of at least one beam 1510 incident on each of the plurality of sensing unit cells 312. For example, the RIS 110 may obtain phase values from six sensing unit cells 312 respectively.

The RIS 110 according to an embodiment may obtain a phase difference value between adjacent unit cells based on the plurality of phase values. The configurable intelligent surface 110 may calculate a phase difference value between two adjacent unit cells among the plurality of phase values. For example, the RIS 110 may calculate five phase difference values by calculating the difference value between two adjacent ports by using six phase values respectively extracted from six sensing unit cells 312. The RIS 110 may designate the calculated five phase difference values as one piece of distribution data 1520. For example, the distribution data 1520 may indicate that the calculated five phase difference values are {338, 32, 335, 290, 308}.

The RIS 110 according to an embodiment may obtain distribution data 1520 of phase difference values based on a plurality of angle values at which a user terminal is possibly located. The RIS 110 may calculate a phase difference value assuming each of the cases where a user terminal is located at a particular angle in a particular propagation environment. For example, the RIS 110 may calculate a phase difference value assuming each of 13 cases where a user terminal is located at 0°, 5°, 10°, 15°, 20°, 25°, 30°, 35°, 40°, 45°, 50°, 55°, and 60° in a particular propagation environment. For example, the RIS 110 may obtain 500 pieces of distribution data 1520 of phase difference values in each of the 13 cases. Accordingly, the RIS 110 may obtain a total of 6,500 pieces of distribution data 1520.

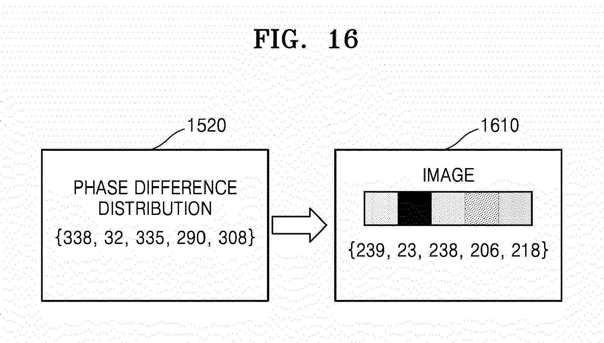

FIG. 16 is a diagram illustrating a method of obtaining an image 1610 by using an RIS 110 according to an embodiment.

The RIS 110 according to an embodiment may convert the obtained distribution data 1520 into an image 1610. The image 1610 may be a spectrum representing each phase difference value included in the distribution data 1520 in gray scale. For example, the image 1610 may be obtained by converting a value of 0 to 360 of 6,500 pieces of distribution data 1520 into a gray scale value of 0 to 255 and visually converting the gray scale value. For example, the image 1610 may be represented as approaching black as the gray scale value approaches 0 because the phase difference value approaches 0. For example, the image 1610 may be represented as approaching white as the gray scale value approaches 255 because the phase difference value approaches 360.

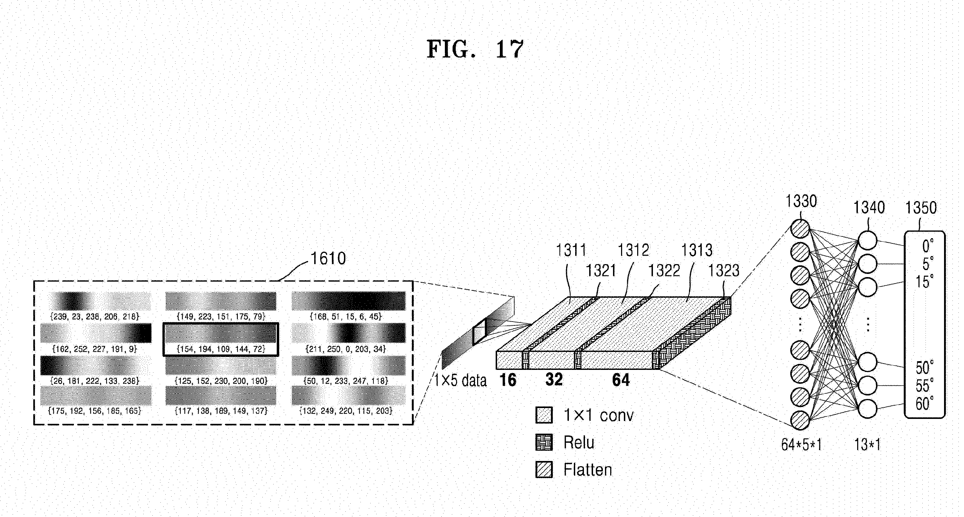

FIG. 17 is a diagram illustrating a method of training a position estimation model by using an RIS 110 according to an embodiment.

The RIS 110 according to an embodiment may use at least a portion of the image 1610 to train the position estimation model. The RIS 110 may use the other portion of the image 1610 to test the trained position estimation model. For example, the RIS 110 may use 6,000 images among 6,500 images 1610 converted from the 6,500 pieces of distribution data 1520 to train the position estimation model. The RIS 110 may use 500 images among the 6,500 images 1610 converted from the 6,500 pieces of distribution data 1520 to test whether the trained position estimation model operates well.

The RIS 110 according to an embodiment may configure a convolutional neural network (CNN) in the position estimation model. The convolutional neural network may be a deep learning model. The RIS 110 may configure a plurality of convolution portions 1311, 1312, and 1313 of at least one sensing module 330. The RIS 110 may connect a plurality of ReLU portions 1321, 1322, and 1323 between the plurality of convolution portions 1311, 1312, and 1313. The data result value derived through each of the plurality of ReLU portions 1321, 1322, and 1323 may be a flattening portion 1330. The flattening portion 1330 may be used to generate a simplification portion 1340 through a data processing process. The simplification portion 1340 may be used to generate an angle data portion 1350 through an additional data processing process.

The RIS 110 according to an embodiment may train the image 1610 by an input of the convolutional neural network. The RIS 110 may input the image 1610 with 1×5 type data to a first convolution portion 1311. The position estimation model may learn the input image.

The RIS 110 according to an embodiment may train the position information of the transceiver by an output of the convolutional neural network. The RIS 110 may learn to output the position of the transmitter 130. The position estimation model may match the output position of the transmitter 130 with the image 1610. The RIS 110 may estimate the position of a user terminal by using a convolutional neural network in which a particular propagation environment has been learned. For example, when the image 1610 converted from the distribution data 1520 of phase difference values measured from a user terminal is input to a convolutional neural network in which a particular propagation environment has been learned, the convolutional neural network may estimate the position of the user terminal.

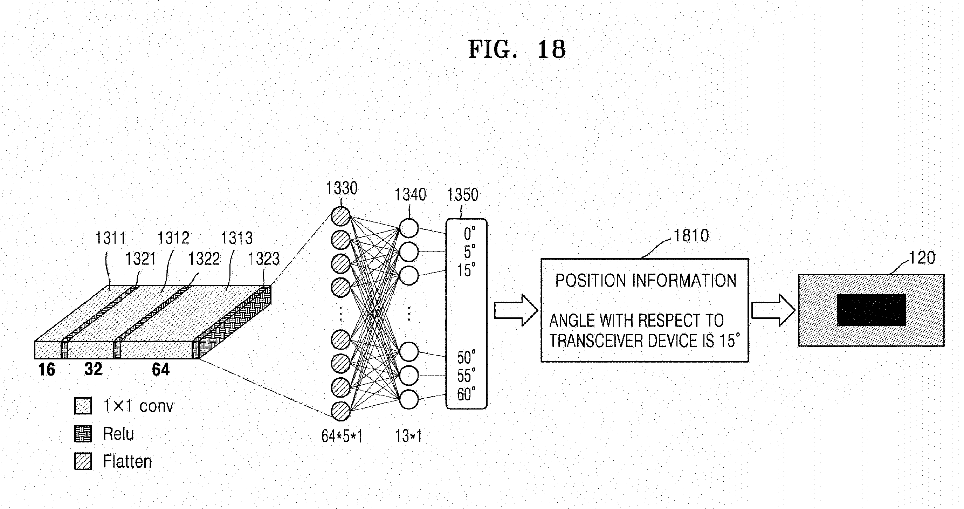

FIG. 18 is a diagram illustrating a method of inputting position information 1810 to a processor 120 by using an RIS 110 according to an embodiment.

The RIS 110 according to an embodiment may input position information 1810 of a user terminal estimated by the convolutional neural network to the processor 120. The position information 1810 may include information about the angle of the RIS 110 with respect to the transceiver. For example, the position information 1810 may indicate that the angle of the RIS 110 with respect to the transceiver is 15°. For example, the RIS 110 may input the estimated position information 1810 of the user terminal to Arduino included in a microcontroller unit (MCU). For example, the RIS 110 may input the estimated position information 1810 of the user terminal to an Arduino beamforming codebook.

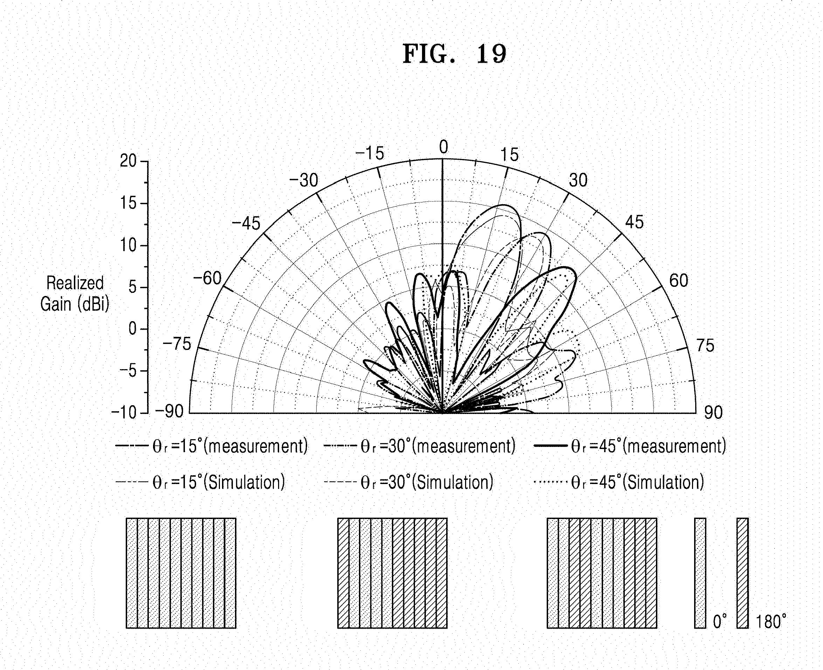

FIG. 19 is a graph illustrating a radiation pattern obtained by applying a bias voltage in accordance with a propagation environment of a beam by using an RIS 110 according to an embodiment. FIG. 19 is a graph illustrating the simulation result and measurement result of the radiation pattern.

The RIS 110 according to an embodiment may apply a bias voltage in accordance with a propagation environment of the at least one beam. The RIS 110 may apply a bias voltage to the varactor diode 450 of each of the plurality of unit cells 310.

Even when the user terminal is at the same position, radio waves may be scattered in different forms depending on the propagation environments. When radio waves are scattered in different forms depending on the propagation environments, the phase values obtained by the sensing unit cell 312 may be different from each other. Accordingly, an error may occur when the position of the user terminal is estimated based on the phase values in an actual environment.

The RIS 110 according to an embodiment may improve the algorithm of the position estimation model in accordance with various propagation environments by using the convolutional neural network. Accordingly, the RIS 110 according to an embodiment may more accurately estimate the position of the user terminal based on the phase values in an actual environment.

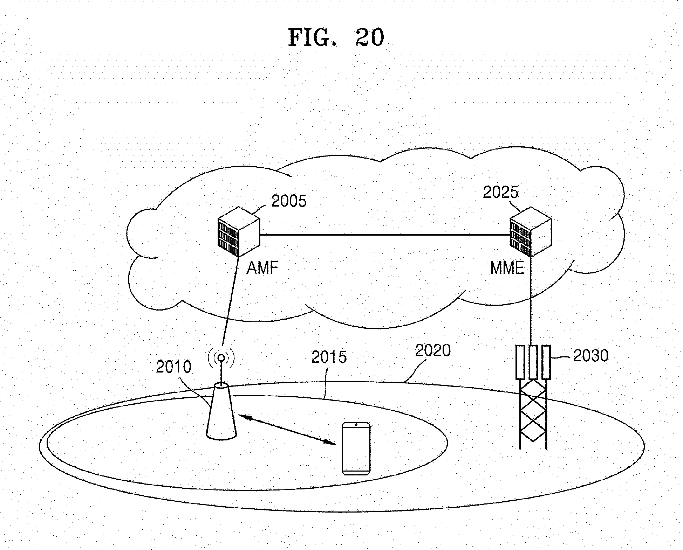

FIG. 20 is a diagram illustrating a communication system to which an RIS 110 is applied according to an embodiment. For example, the communication system illustrated in FIG. 20 may be a 5G communication system. However, the disclosure is not limited thereto, and the description of the communication system given with reference to FIG. 20 may also be applied to next-generation communication systems after 5G communication systems, that is, to 6G communication systems. The communication system may include a network device (e.g., an access and mobility function (AMF)) 2005, a first base station 2010, a user terminal 2015, a mobility management entity (MME) 2025, and a second base station 2030.

The network device 2005 may be connected to the first base station 2010 and the mobility management entity 2025. The network device 2005 may connect the user terminal 2015 to the network of the communication system. The network device 2005 may manage various control functions of the user terminal 2015. The network device 2005 may allow the user terminal 2015 to access the network. The network device 2005 may support a mobility function of the user terminal 2015. The mobility function may be a function for allowing the user terminal 2015 to freely move from a cell area 2020 to another cell area. The network device 2005 may support a Quality of Service (QoS) setting function of the user terminal 2015. Based on the current resources, the network device 2005 may determine the priority of information to be transmitted when transmitting data of the user terminal 2015 and ensure a designated level during data transmission.

The first base station 2010 may be connected to the network device 2005 and the user terminal 2015. The first base station 2010 may generate the cell area 2020. The first base station 2010 may connect the user terminal 2015 in the cell area 2020 to the network. The first base station 2010 may establish a channel for the user terminal 2015 to wirelessly access the network. The first base station 2010 may control data transmission/reception of the user terminal 2015 based on status information including available resources of the user terminal 2015 and an environment of the established channel.

The mobility management entity 2025 may be connected to the network device 2005 and the second base station 2030. The mobility management entity 2025 may support a bearer setting function of the user terminal 2015. By setting a bearer, it may be possible to define how to process data of the user terminal 315 when passing through the network.

The second base station 2030 may be connected to the mobility management entity 2025. The second base station 2030 may provide a data bearer under the control by the mobility management entity 2025.

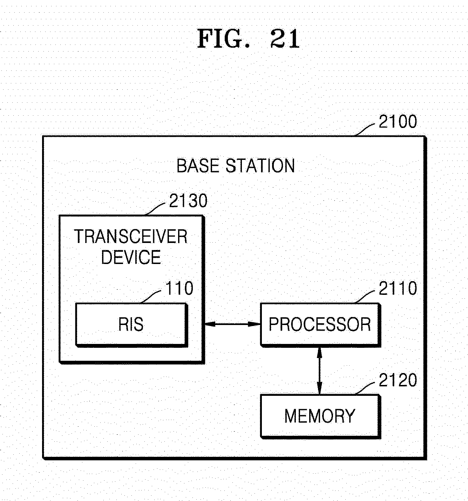

FIG. 21 is a block diagram of a base station 2100 according to an embodiment. The base station 2100 according to an embodiment may correspond to the first base station 2010 described with reference to FIG. 20. That is, the base station 2100 according to an embodiment may be a device that connects the user terminal 2115 to the network of the communication system and controls data transmission/reception of the user terminal 2015. The base station 2100 may include a processor 2110, a memory 2120, and a transceiver device 2130.

The processor 2110 may control overall operations of the base station 2100. The processor 2110 may perform protocol stack functions required by the communication standards. The processor 2110 may perform baseband processing of transmitted/received signals and a backhaul communication function. The baseband processing may refer to a processing process for converting digital data into a radio frequency (RF) signal in order to transmit signals through a radio access network (RAN). The backhaul communication function may be a function for transmitting a signal from a remote position to another position. The processor 2110 may store data in the memory 2120. The processor 2110 may load the data stored in the memory 2120.

By executing a program stored in the memory 2120, the processor 2110 may determine a channel type through which at least one piece of uplink control information is to be transmitted. The processor 410 may provide setting information based on the determination result to a terminal and control the transceiver device 2130 to receive at least one piece of uplink control information based on the setting information. The processor 2110 may transmit setting information about whether to simultaneously transmit an uplink control channel and an uplink data channel and may control the transceiver device 2130 to transmit scheduling information about at least one of at least one uplink control channel and at least one uplink data channel.

The memory 2120 may store at least one program including a basic program, an application program, and a setting program for operation of the base station 2100. The memory 2120 may store at least one piece of terminal information including information about the bearer assigned to a terminal connected to the base station 2100 and measurement results reported from the connected terminal. The memory 2120 may store determination information as a criterion for determining whether to provide a multiple connection to the terminal or to stop providing the multiple connection. The memory 2120 may store data according to a storage request of the processor 2110. The memory 2120 may provide the stored data to the processor 2110 according to a load request of the processor 2110.

The transceiver device 2130 may transmit/receive signals to/from the terminal through a wireless channel. The transceiver device 2130 may perform a conversion function between a baseband signal and digital data according to the physical layer standards of the communication system. When transmitting data, the transceiver device 2130 may encode and modulate data to be transmitted. When receiving data, the transceiver device 2130 may demodulate and decode a baseband signal. The transceiver device 2130 may upconvert a baseband signal into an RF band signal and then transmit the same through an antenna. The transceiver device 2130 may downconvert an RF band signal received through the antenna into a baseband signal.

Transceiver device 2130 may include an RIS 110. The RIS 110 may set a channel environment for the transceiver device 2130 to transmit or receive a signal. The RIS 110 may set a beam generated by the transceiver device 2130 to establish a channel. The RIS 110 may adjust the direction of a beam for the transceiver device 2130 to transmit or receive a signal.

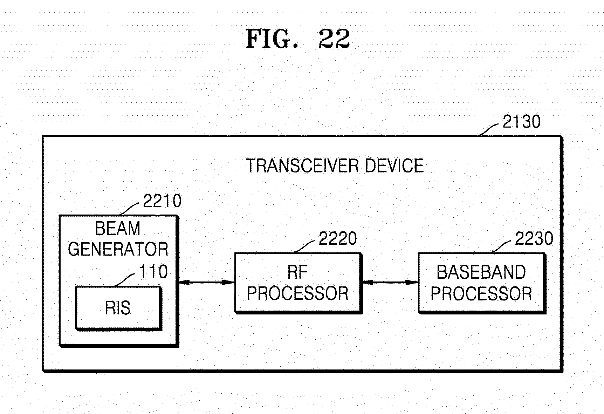

FIG. 22 is a block diagram of a transceiver device 2130 according to an embodiment. The transceiver device 2130 according to an embodiment may include a beam generator 2210, an RF processor 2220, and a baseband processor 2230.

The beam generator 2210 may transmit/receive signals. The beam generator 2210 may include an antenna for transmitting/receiving signals. The beam generator 2210 may generate a beam for transmitting/receiving signals. The beam generator 2210 may perform beamforming. The beam generator 2210 may include an RIS 110. The RIS 110 may set a beam generated by the beam generator 2210. The RIS 110 may adjust the direction of a beam generated by the beam generator 2210.

The RF processor 2220 may perform functions for transmitting/receiving a signal through a wireless channel, such as a signal band conversion function and a signal amplification function. The RF processor 2220 may upconvert a baseband signal into an RF band signal. The RF processor 2220 may transmit an RF band signal through the beam generator 2210. The RF processor 2220 may downconvert an RF band signal received through the beam generator 2210 into a baseband signal.

The baseband processor 2230 may perform a conversion function between a baseband signal and digital data according to the physical layer standards of the set radio access technology. When transmitting data, the baseband processor 2230 may encode and modulate digital data to be transmitted. When receiving data, the baseband processor 2230 may convert a baseband signal received from the RF processor 2220 into digital data through demodulation and decoding.

The disclosure may provide a method of reflecting a signal transmitted from a transmitter to a moving receiver by estimating the position of the receiver by using a reconfigurable intelligent surface including a varactor diode.

The reconfigurable intelligent surface according to the disclosure may implement a sensing function by using a deep learning model that previously learned a signal propagation environment.

The reconfigurable intelligent surface according to the disclosure may be used in various communication systems by using phase information of a received signal without a separate receiving antenna by including at least one sensor module.

A reconfigurable intelligent surface according to an embodiment may include a plurality of unit cells 310 arranged in a mesh form. The reconfigurable intelligent surface according to an embodiment may include a beam steering module 320 electrically connected to the plurality of unit cells 310. The reconfigurable intelligent surface according to an embodiment may include at least one sensing module 330 electrically connected to the plurality of unit cells 310. The plurality of unit cells 310 according to an embodiment may include a plurality of reflection unit cells 311 configured to reflect at least one signal incident thereon in a direction set by the beam steering module 320. The plurality of unit cells 310 according to an embodiment may include a plurality of sensing unit cells 312 configured to obtain phase information of the at least one signal and transmit the phase information to the at least one sensing module 330.

Each of the plurality of unit cells 310 according to an embodiment may include a first substrate 411. Each of the plurality of unit cells 310 according to an embodiment may include a second substrate 412 facing the first substrate 411. Each of the plurality of unit cells 310 according to an embodiment may include at least one via wall 430 passing through at least a portion of the first substrate 411 and the second substrate 412.

Each of the plurality of unit cells 310 according to an embodiment may include at least one patch 440 arranged over the second substrate 412.

The at least one patch 440 according to an embodiment may be configured to transmit the at least one signal to the at least one sensing module 330 through a sensing line 470.

Each of the plurality of unit cells 310 according to an embodiment may include at least one varactor diode 450 arranged over the at least one patch 440.

A communication method using a reconfigurable intelligent surface according to an embodiment may include receiving, by the reconfigurable intelligent surface, at least one beam incident thereon at different phases. The communication method using the reconfigurable intelligent surface according to an embodiment may include obtaining, by the reconfigurable intelligent surface, phase information by sensing the at least one beam by using a plurality of sensing unit cells. The communication method using the reconfigurable intelligent surface according to an embodiment may include converting, by the reconfigurable intelligent surface, the phase information into an image and training a position estimation model by using the image. The communication method using the reconfigurable intelligent surface according to an embodiment may include estimating, by the reconfigurable intelligent surface, position information of a transceiver by using the trained position estimation model. The communication method using the reconfigurable intelligent surface according to an embodiment may include reflecting, by the reconfigurable intelligent surface, the at least one beam incident thereon to the transceiver by inputting the estimated position information of the transceiver to a processor. The communication method using the reconfigurable intelligent surface according to an embodiment may include applying, by the reconfigurable intelligent surface, a bias voltage in accordance with a propagation environment of the at least one beam.

The obtaining of the phase information according to an embodiment may include obtaining a plurality of phase values from the plurality of sensing unit cells respectively. The obtaining of the phase information according to an embodiment may include obtaining a phase difference value between adjacent unit cells based on the plurality of phase values. The obtaining of the phase information according to an embodiment may include obtaining distribution data of the phase difference value based on a plurality of angle values at which a user terminal is possibly located.

The training of the position estimation model according to an embodiment may include converting the distribution data into the image.

The training of the position estimation model according to an embodiment may include using at least a portion of the image to train the position estimation model. The training of the position estimation model according to an embodiment may include using the other portion of the image to test the trained position estimation model.

The training of the position estimation model according to an embodiment may include configuring a convolutional neural network (CNN) in the position estimation model. The training of the position estimation model according to an embodiment may include training the image by an input of the convolutional neural network. The training of the position estimation model according to an embodiment may include training the position information of the transceiver by an output of the convolutional neural network.

A transceiver device according to an embodiment may include a beam generator configured to generate a beam for transmitting/receiving a radio frequency (RF) band signal. The transceiver device according to an embodiment may include an RF processor configured to upconvert a baseband signal into the RF band signal and transmit the RF band signal through the beam generator or to downconvert the RF band signal received through the beam generator into the baseband signal. The transceiver device according to an embodiment may include a baseband processor configured to perform a conversion function between the baseband signal and digital data. The beam generator according to an embodiment may include an antenna configured to transmit/receive the RF band signal. The transceiver device according to an embodiment may include a reconfigurable intelligent surface configured to adjust a direction of the beam. The reconfigurable intelligent surface according to an embodiment may be configured to receive at least one beam incident thereon at different phases. The reconfigurable intelligent surface according to an embodiment may be configured to obtain phase information from the at least one beam. The reconfigurable intelligent surface according to an embodiment may be configured to train a position estimation model by using an image obtained by converting the phase information. The reconfigurable intelligent surface according to an embodiment may be configured to estimate position information of a transceiver by using the trained position estimation model. The reconfigurable intelligent surface according to an embodiment may be configured to reflect the at least one beam incident thereon to the transceiver by inputting the estimated position information of the transceiver to a processor. The reconfigurable intelligent surface according to an embodiment may be configured to apply a bias voltage in accordance with a propagation environment of the at least one beam.

The reconfigurable intelligent surface according to an embodiment may be configured to obtain a plurality of phase values. The reconfigurable intelligent surface according to an embodiment may be configured to obtain a phase difference value between adjacent unit cells based on the plurality of phase values. The reconfigurable intelligent surface according to an embodiment may be configured to obtain distribution data of the phase difference value based on a plurality of angle values at which a user terminal is possibly located.

The reconfigurable intelligent surface according to an embodiment may be configured to convert the distribution data into the image.

The reconfigurable intelligent surface according to an embodiment may be configured to use at least a portion of the image to train the position estimation model. The reconfigurable intelligent surface according to an embodiment may be configured to use the other portion of the image to test the trained position estimation model.

The reconfigurable intelligent surface according to an embodiment may be configured to configure a convolutional neural network (CNN) in the position estimation model. The reconfigurable intelligent surface according to an embodiment may be configured to train the image by an input of the convolutional neural network. The reconfigurable intelligent surface according to an embodiment may be configured to train the position information of the transceiver by an output of the convolutional neural network.

The reconfigurable intelligent surface according to an embodiment may improve the quality of communication between the transceivers by reflecting signals to correspond to the positions of the transceivers that change in real time.

The plurality of unit cells of the reconfigurable intelligent surface according to an embodiment may include a via wall structure. Accordingly, the reconfigurable intelligent surface according to an embodiment may more accurately estimate the position of the transmitter by reducing the phase distortion of received radio waves by reducing the influence between the plurality of unit cells.

The method according to an embodiment may be embodied in the form of program commands executable through various computer means, which may be recorded on a computer-readable recording medium. The computer-readable recording medium may include program instructions, data files, and data structures either alone or in combination. The program commands recorded on the computer-readable recording medium may be those that are especially designed and configured for the present disclosure, or may be those that are known and available to computer programmers skilled in the art. Examples of the computer-readable recording medium include magnetic media such as hard disks, floppy disks, and magnetic tapes, optical media such as CD-ROMs and DVDs, magneto-optical media such as floptical disks, and hardware devices such as ROMs, RAMs, and flash memories that are specially configured to store and execute program instructions. Examples of the program commands include not only machine language codes such as those generated by compilers, but also high-level language codes that may be executed by computers by using interpreters or the like.

Some embodiments may also be implemented in the form of computer-readable recording mediums including instructions executable by computers, such as program modules executed by computers. The computer-readable recording mediums may be any available mediums accessible by computers and may include volatile or nonvolatile mediums and removable or nonremovable mediums. Also, the computer-readable recording mediums may include computer storage mediums and communication mediums. The computer storage mediums may include volatile or nonvolatile mediums and removable or nonremovable mediums implemented by any method or technology for storing information such as computer-readable instructions, data structures, program modules, or other data. The communication mediums may include any information transmission medium and may include other transmission mechanisms or other data of modulated data signals such as carrier waves, computer-readable instructions, data structures, or program modules. Also, some embodiments may be implemented by a computer program or computer program product including instructions executable by a computer, such as a computer program executed by a computer.

The machine-readable storage medium may be provided in the form of a non-transitory storage medium. Here, the term "non-transitory storage medium" may mean that the storage medium is a tangible device and does not include signals (e.g., electromagnetic waves), and may mean that data may be permanently or temporarily stored in the storage medium. For example, the 'non-transitory storage medium' may include a buffer in which data is temporarily stored.

According to an embodiment, the method according to various embodiments described herein may be included and provided in a computer program product. The computer program product may be traded as a product between a seller and a buyer. The computer program product may be distributed in the form of a machine-readable storage medium (e.g., a compact disc read only memory (CD-ROM)) or may be distributed (e.g., downloaded or uploaded) online through an application store or directly between two user devices (e.g., smartphones). In the case of online distribution, at least a portion of the computer program product (e.g., a downloadable app) may be at least temporarily stored or temporarily generated in a storage medium readable by a machine such as a manufacturer's server, a server of an application store, or a memory of a relay server.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the disclosure as defined by the following claims.

## Claims

1. A reconfigurable intelligent surface comprising:
a plurality of unit cells arranged in a mesh form;
a beam steering module electrically connected to the plurality of unit cells; and
at least one sensing module electrically connected to the plurality of unit cells,
wherein the plurality of unit cells comprise:
a plurality of reflection unit cells configured to reflect at least one signal incident thereon in a direction set by the beam steering module; and
a plurality of sensing unit cells configured to obtain phase information of the at least one signal and transmit the phase information to the at least one sensing module.

2. The reconfigurable intelligent surface of claim 1, wherein each of the plurality of unit cells comprises:
a first substrate;
a second substrate facing the first substrate; and
at least one via wall passing through at least a portion of the first substrate and the second substrate.

3. The reconfigurable intelligent surface of claim 2, wherein each of the plurality of unit cells further comprises at least one patch arranged over the second substrate.

4. The reconfigurable intelligent surface of claim 3, wherein the at least one patch is configured to transmit the at least one signal to the at least one sensing module through a sensing line.

5. The reconfigurable intelligent surface of claim 4, wherein each of the plurality of unit cells further comprises at least one varactor diode arranged over the at least one patch.

6. A communication method using a reconfigurable intelligent surface, the communication method comprising:
receiving, by the reconfigurable intelligent surface, at least one beam incident thereon at different phases;
obtaining, by the reconfigurable intelligent surface, phase information by sensing the at least one beam by using a plurality of sensing unit cells;
converting, by the reconfigurable intelligent surface, the phase information into an image and training a position estimation model by using the image;
estimating, by the reconfigurable intelligent surface, position information of a transceiver by using the trained position estimation model;
reflecting, by the reconfigurable intelligent surface, the at least one beam incident thereon to the transceiver by inputting the estimated position information of the transceiver to a processor; and
applying, by the reconfigurable intelligent surface, a bias voltage in accordance with a propagation environment of the at least one beam.

7. The communication method of claim 6, wherein the obtaining of the phase information comprises:
obtaining a plurality of phase values from the plurality of sensing unit cells, respectively;
obtaining a phase difference value between adjacent unit cells based on the plurality of phase values; and
obtaining distribution data of the phase difference value based on a plurality of angle values at which a user terminal is possibly located.

8. The communication method of claim 7, wherein the training of the position estimation model comprises converting the distribution data into the image.

9. The communication method of claim 8, wherein the training of the position estimation model further comprises:
using at least a portion of the image to train the position estimation model; and
using the other portion of the image to test the trained position estimation model.

10. The communication method of claim 9, wherein the training of the position estimation model further comprises:
configuring a convolutional neural network (CNN) in the position estimation model;
training the image by an input of the convolutional neural network; and
training the position information of the transceiver by an output of the convolutional neural network.

11. A transceiver device comprising:
a beam generator configured to generate a beam for transmitting/receiving a radio frequency (RF) band signal;
an RF processor configured to upconvert a baseband signal into the RF band signal and transmit the RF band signal through the beam generator or to downconvert the RF band signal received through the beam generator into the baseband signal; and
a baseband processor configured to perform a conversion function between the baseband signal and digital data,
wherein the beam generator comprises:
an antenna configured to transmit/receive the RF band signal; and
a reconfigurable intelligent surface configured to adjust a direction of the beam,
wherein the reconfigurable intelligent surface is further configured to receive at least one beam incident thereon at different phases,
obtain phase information from the at least one beam,
train a position estimation model by using an image obtained by converting the phase information,
estimate position information of a transceiver by using the trained position estimation model,
reflect the at least one beam incident thereon to the transceiver by inputting the estimated position information of the transceiver to a processor, and
apply a bias voltage in accordance with a propagation environment of the at least one beam.

12. The transceiver device of claim 11, wherein the reconfigurable intelligent surface is further configured to
obtain a plurality of phase values,
obtain a phase difference value between adjacent unit cells based on the plurality of phase values, and
obtain distribution data of the phase difference value based on a plurality of angle values at which a user terminal is possibly located.

13. The transceiver device of claim 12, wherein the reconfigurable intelligent surface is further configured to convert the distribution data into the image.

14. The transceiver device of claim 13, wherein the reconfigurable intelligent surface is further configured to
use at least a portion of the image to train the position estimation model, and
use the other portion of the image to test the trained position estimation model.

15. The transceiver device of claim 14, wherein the reconfigurable intelligent surface is further configured to
configure a convolutional neural network (CNN) in the position estimation model,
train the image by an input of the convolutional neural network, and
train the position information of the transceiver by an output of the convolutional neural network.
